## Europäisches Patentamt

## European Patent Office

## Office européen des brevets

(11) Veröffentlichungsnummer: **0 291 996**
**B1**

(12) **EUROPÄISCHE PATENTSCHRIFT**

(45) Veröffentlichungstag der Patentschrift:
**11.04.90**

(51) Int. Cl.⁴: **B60K 41/06**

(21) Anmeldenummer: **88108117.8**

(22) Anmeldetag: **06.12.83**

(60) Veröffentlichungsnummer der früheren Anmeldung
nach Art. 76 EPÜ: **0110428**

(54) **Fahrzeuggetriebe-Steuerungssystem.**

(30) Priorität: **06.12.82 US 446881**

(43) Veröffentlichungstag der Anmeldung:
**23.11.88 Patentblatt 88/47**

(45) Bekanntmachung des Hinweises auf die Patenterteilung:
**11.04.90 Patentblatt 90/15**

(84) Benannte Vertragsstaaten:
**AT BE CH DE FR GB IT LI NL SE**

(56) Entgegenhaltungen:
**EP-A- 0 091 083**
**DE-A- 2 756 719**
**GB-A- 736 610**
**GB-A- 2 081 926**
**US-A- 1 336 796**
**US-A- 3 451 284**

(73) Patentinhaber: **DEERE & COMPANY, 1 John Deere Road, Moline, Illinois 61265(US)**

(72) Erfinder: **McKee, Kevin Douglas, 1103 Lantern Square No. 5, Waterloo Iowa 50701(US)**

(74) Vertreter: **Fricke, Joachim, Dr. et al, Dr. R. Döring, Dr. J. Fricke, Patentanwälte Josephspitalstrasse 7, D-8000 München 2(DE)**

## Beschreibung

Die Erfindung betrifft ein Fahrzeuggetriebe-Steuerungssystem mit einer manuell betätigbaren Eingangsschalthebeleinrichtung (28) zur Erzeugung von mechanischen Gangschaltsteuersignalen, welche eine Neutralstellung und mehrere von der Neutralstellung abweichende Schaltstellungen aufweist, mit einem Steuerkreis 30,34 zum Erzeugen elektrischer Gangschaltsteuersignale, mit Gangschaltbetätigungseinrichtungen 18 zum Schalten des Getriebes 12 in Abhängigkeit von den mechanischen und den elektrischen Gangschaltsteuersignalen und mit einer elektrischen Spannungsquelle zur Versorgung des Steuerkreises.

Ein solches Fahrzeuggetriebe-Steuerungssystem ist Gegenstand der EP-A 91 083 veröffentlicht am 12.10.1983, welche von einem Steuerungssystem ausgeht, das aus der DE-A 2 756 719 bekannt ist.

Um bei dem Gegenstand gemäß der vorstehenden EP-A 91 083 sicherzustellen, daß die manuelle Steuerung des Getriebes bei Auftreten von Fehlern im elektrischen oder elektronischen System nicht beeinträchtigt wird, ist ein Motor vorgesehen, der in Abhängigkeit von Steuersignalen betätigt wird und mechanisch mit den Gangschaltbetätigungseinrichtungen verbunden ist, mit denen auch der Schalthebel mechanisch verbunden ist.

Auf diese Weise wird der Stellweg des Schalthebels bei seiner Betätigung mechanisch auf die Gangschaltbetätigungseinrichtungen übertragen. Die Folge ist, daß bei Ausfällen im elektrischen und/oder elektronischen System eine Handsteuerung des Getriebes stets möglich bleibt. Hinzu kommt, daß auch die Ausgangssignale des Steuerkreises in eine mechanische Bewegung umgeformt werden, wodurch weitere mögliche Fehlerquellen im elektrischen bzw. im elektronischen System ausgeschaltet werden können.

Es ist Aufgabe der Erfindung, ein Fahrzeuggetriebe-Steuerungssystem der genannten Art so weiterzubilden, daß ein zufälliges Schalten des Getriebes durch den elektronischen Steuerkreis verhindert wird.

Diese Aufgabe wird im wesentlichen dadurch gelöst, daß ein Neutralschalter zwischen der Spannungsquelle und den Wicklungen der elektrischen Antriebseinrichtung angeordnet und arbeitsmäßig mit der Schalthebeleinrichtung gekuppelt ist, und zwar so, daß der Neutralschalter offen ist und die Versorgung der Wicklungen nur dann unterbindet, wenn die Schalthebeleinrichtung sich in der Neutralstellung befindet.

Dadurch wird sichergestellt, daß die Wicklungen einer nach Art einer Schrittschalteinrichtung arbeitenden elektrischen Antriebseinrichtung, die in Abhängigkeit von den elektrischen Gangschaltsteuersignalen ein- und ausschaltbar sind, um die Gangschaltbetätigungseinrichtungen zu betätigen, unbeabsichtigt mit der Stromquelle verbunden werden, und zwar unabhängig vom Zustand des elektronischen Steuerkreises.

Vorteilhafterweise ist ein weiterer manuell betätigbarer Schalter zwischen dem Neutralschalter nach Anspruch 1 und der Spannungsquelle in Reihe angeordnet, der in seiner Offenstellung die Versorgung der Wicklungen des Motors unterbricht. Dieser zweite Schalter ist ein manuell betätigbarer Auswahlschalter für automatische oder manuelle Arbeitsweise. Dieser Schalter kann zweckmäßigerweise in einer bequem erreichbaren Stellung an der Instrumententafel angeordnet sein.

Wenn beide Schalter geschlossen sind, ist ein wirksamer Steuerkreis zwischen der Spannungsquelle und der Schrittschalteinrichtung vorgesehen, so daß die elektrischen Gangschaltsteuersignale ausgewählte Wicklungen der Antriebseinrichtung einschalten können. Wenn dagegen der manuelle Schalter offen ist, weil der Fahrer das Steuerungssystem manuell steuern will, und/oder wenn der Neutrallschalter offen ist, ist es ausgeschlossen, daß automatisch erzeugte Gangschaltsteuersignale eine oder mehrere Wicklungen der Antriebseinrichtungen mit der Stromquelle verbinden können. Dadurch wird eine wesentlich größere Sicherheit im Betrieb des Fahrzeuggetriebe-Steuerungssystems erzielt.

Die Erfindung wird nachfolgend anhand einer schematischen Zeichnung an einem Ausführungsbeispiel näher erläutert.

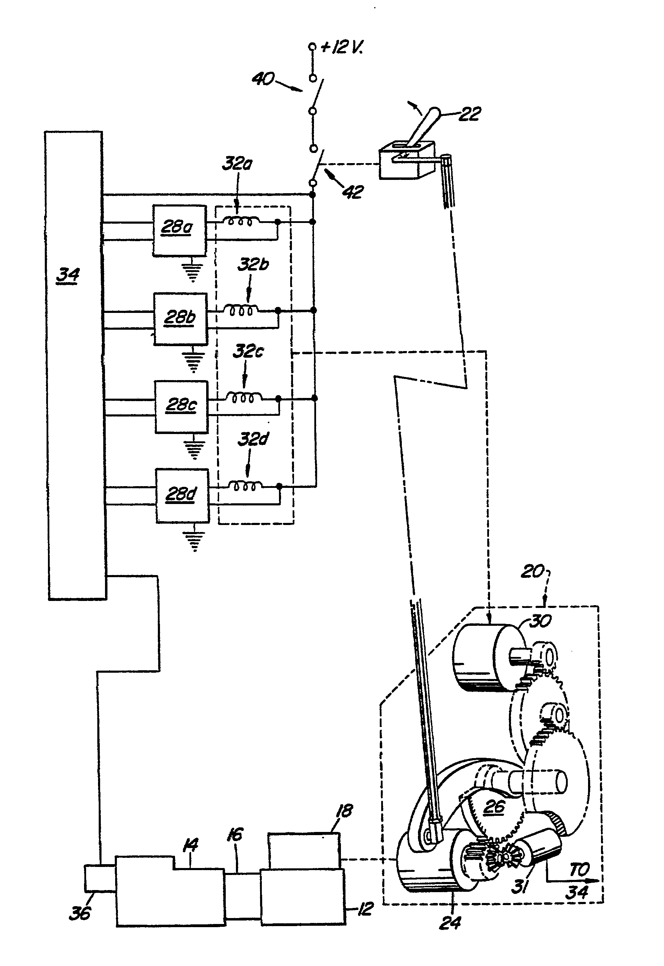

Das Fahrzeuggetriebe-Steuerungssystem gemäß der Erfindung ist in der einzigen Figur in schematischer Ansicht gezeigt.

Das dargestellte Fahrzeuggetriebe-Steuerungssystem kann zum Steuern eines hydraulisch betätigbaren Mehrgang-Fahrzeuggetriebes 12, z.B. für einen Ackerschlepper, bestimmt sein. Dieses Getriebe wird durch einen üblichen Motor 14 über eine Fahrkupplung 16 angetrieben. Das Getriebe 12 wird durch Schaltventile 18 geschaltet, die durch eine Schnittstelleneinrichtung 20 in Abhängigkeit von elektrisch und von manuell gesteuerten Signalen arbeitet. Die Schnittstelleneinrichtung 20 ist über ein Gestänge mit einem die manuellen Steuersignale erzeugenden Eingangsschalthebel 22 verbunden. Das Gestänge greift an einem Drehventil 24 über ein Sektorrad 26 an. Die elektrischen Steuersignale werden durch Krafttreibereinrichtungen 28a bis 28d erzeugt, die mit dem Drehventil 24 über eine nach Art einer Schrittschalteinrichtung arbeitende elektrische Antriebseinrichtung 30 in Verbindung stehen. Diese Schrittschalteinrichtung kann als Schrittschaltmotor ausgebildet sein. Sie umfaßt mehrere Phasenwicklungen 32a bis 32d, die in ausgewählten Kombinationen eingeschaltet werden können, um die Schrittschalteinrichtung 30 nach Wunsch zu drehen. Die Wicklungen 32a bis 32d sind außerhalb des Schrittmotors 30 zur Vereinfachung und Verdeutlichung dargestellt, obwohl sie selbstverständlich in der praktischen Ausführung innerhalb des Motors angeordnet sein können, wie dies durch die gestrichelte Linie in der einzigen Figur dargestellt ist.

Die Krafttreibereinrichtungen 28a bis 28d werden durch einen elektronischen Steuerkreis 34 in Abhängigkeit von Parametern kontrolliert, z.B. von der Motordrehzahl, die von einem Drehzahlfühler 36 erfaßt wird. Eine Getriebe-Kodiereinrichtung 31 liefert für den Steuerkreis 34 die Getriebezustandssignale. Die Krafttreibereinrichtungen 28a bis 28d und der elektronische Steuerkreis 34 brauchen im Zusammenhang mit der vorliegenden Erfindung nicht näher erläutert zu werden.

Die Wicklungen 32a bis 32d stehen mit dem Batterieanschluß über in Reihe geschaltete Schalter 40 und 42 in Verbindung. Der Schalter 40 ist ein manuell betätigbarer Auswahlschalter für automatische oder manuelle Arbeitsweise. Dieser Schalter ist in einer bequem erreichbaren Stellung an der Instrumententafel des Fahrzeuges angeordnet (nicht gezeigt). Der Schalter 42 ist ein Neutral-Sperrschalter. Dieser ist mit dem Schalthebel 22 arbeitsmäßig gekuppelt und zwar so, daß der Schalter 42 nur dann öffnet, wenn der Schalthebel 22 sich in seiner neutralen Stellung befindet.

Wenn beide Schalter 40 und 42 geschlossen sind, ist ein Kreis zwischen dem Anschluß der Batterie und der einen Seite des Satzes von Wicklungen 32a bis 32d hergestellt. Damit können ausgewählte Wicklungen 32a bis 32d eingeschaltet werden, wenn die korrespondierenden Krafttreibereinrichtungen die andere Seite der ausgewählten Wicklungen mit Erde verbinden. Wenn jedoch einer der beiden Schalter 40 oder 42 oder beide Schalter offen sind, dann ist es unmöglich, daß irgendeine der Wicklungen 32a bis 32d der Schrittschalteinrichtung eingeschaltet wird, und zwar unabhängig vom Zustand des elektronischen Steuerkreises 34 oder vom Zustand des Kraftantriebseinrichtung 28a bis 28d.

Das bedeutet, daß dann, wenn die Bedienungsperson den Schalter 40 öffnet, um eine manuelle Betriebsweise zu verwirklichen, oder wenn der Schalthebel 22 in die Neutralstellung gebracht wird, das Getriebe 12 in Abhängigkeit von elektronischen Steuersignalen nicht geschaltet werden kann, auch wenn von dem elektronichen Steuerkreis solche elektronischen Steuersignale erzeugt werden. In diesem Fall kann das Getriebe nur manuell über das Sektorzahnrad 26 geschaltet werden, in dem der Schalthebel 22 verschwenkt wird.

Aufgrund dieser Ausbildung wird verhindert, daß elektrische Schaltfehler mit der manuellen Steuerung des Getriebes in Konflikt geraten.

Ferner kann dann, wenn die Getriebekodiereinrichtung 31 anzeigt, daß sich das Getriebe in der Neutralstellung befindet, die Spannung der Spannungsquelle jedoch weiterhin im Bereich stromab vom Schalter 42 vorliegt, ein Mikroprozessor in dem Steuerkreis 34 so programmiert werden, daß eine nicht gezeigte Warnanzeige eingeschaltet wird, um die Bedienungsperson darauf aufmerksam zu machen, daß irgendein Fehler aufgetreten ist.

## Patentansprüche

1. Fahrzeuggetriebe-Steuerungssystem mit einer manuell betätigbaren Eingangs-Schalthebeleinrichtung (22) zur Erzeugung von mechanischen Gangschaltsteuersignalen, welche eine Neutralstellung und mehrere von der Neutralstellung abweichende Schaltstellungen aufweist, mit einem Steuerkreis (30,34) zum Erzeugen elektrischer Gangschaltsteuersignale, mit Gangschaltbetätigungseinrichtungen (18) zum Schalten des Getriebes (12) in Abhängigkeit von den mechanischen und den elektrischen Gangschaltsteuersignalen und mit einer elektrischen Spannungsquelle zur Versorgung des Steuerkreises, **gekennzeichnet** durch eine nach Art einer Schrittschalteinrichtung arbeitende elektrische Antriebseinrichtung (Schriftschaltmotor) (30) mit mehreren Wicklungen (32a bis 32d), die in Abhängigkeit von den elektrischen Gangschaltsteuersignalen ein- und ausschaltbar sind, um die Gangschaltbetätigungseinrichtungen (18) zu betätigen, durch ein Gestänge, das mit der Schalthebeleinrichtung (22) gekuppelt ist und auf die mechanischen Gangschaltsteuersignale anspricht, und durch einen Neutralschalter (42), der zwischen der Spannungsquelle und den Wicklungen (32a bis 32d) der elektrischen Antriebseinrichtung (30) angeordnet und arbeitsmäßig mit der Schalthebeleinrichtung (22) gekuppelt ist, derart, daß der Neutralschalter (42) offen ist und die Versorgung der Wicklungen (32a bis 32d) nur dann unterbindet, wenn die Schalthebeleinrichtung (22) sich in der Neutralstellung befindet.

2. Fahrzeuggetriebe-Steuerungssystem nach Anspruch 1, dadurch **gekennzeichnet**, daß ein weiterer, manuell betätigbarer Auswahlschalter (40) zwischen dem Neutralschalter (42) und der Spannungsquelle in Reihe angeordnet ist und in der Offenstellung die Versorgung der Wicklungen (32a bis 32d) unterbricht.

## Claims

1. Control system for a vehicle transmission with a manually operable input gear-lever device (22) for generating mechanical change-speed control signals, which comprise a neutral position and a plurality of change positions deviating from the neutral position, with a control circuit (30, 34) for generating electrical change-speed control signals, with change-speed operating devices (18) for changing the gear (12) in dependence on the mechanical and the electrical change-speed control signals and with an electrical voltage source for supplying the control circuit, characterized by an electrical drive device operating in the manner of a stepping device (stepping motor) (30) with a plurality of windings (32a to 32d), which can be switched on and off in dependence on the electrical change-speed control signals, in order to actuate the change-speed operating devices (18), by a linkage which is coupled to the gear-lever device (22) and responds to the mechanical change-speed control signals, and by a neutral switch (42) which is arranged between the voltage source and the windings (32a to 32d) of the electrical drive device (30) and is operatively so coupled to the gear-lever device (22) that the neutral switch (42) is located in the neutral position.

2. Control system for a vehicle transmission according to claim 1, characterized in that a further, manually operable selector switch (40) is arranged in series between the neutral switch (42) and the voltage source and interrupts the supply to the windings (32a to 32d) in the open position.

## Revendications

1. Système de commande de transmission de véhicule comportant un dispositif à levier de changement de vitesse d'entrée actionnable manuellement (22) pour engendrer des signaux de commande de changement de vitesse mécaniques qui comporte une position de point mort et plusieurs positions d'enclenchement différentes de la position de point mort, comportant un circuit de commande (30, 34) pour engendrer des signaux de commande de changement de vitesse électriques, comportant des dispositifs d'actionnement de changement de vitesse (18) pour changer le rapport de la transmission (12) en fonction des signaux de commande de changement de vitesses mécaniques et électriques, et comportant une source de tension électrique pour l'alimentation du circuit de commande, caractérisé par un dispositif d'entraînement électrique fonctionnant à la façon d'un dispositif pas à pas (moteur pas à pas (30)) comportant plusieurs enroulements (32a à 32d) qui peuvent être connectés et déconnectés en fonction des signaux de commande de changement de vitesse électriques, pour actionner les dispositifs d'actionnement de changement de vitesse (18), par une tringlerie qui est couplée au dispositif à levier de changement de vitesse (22) et réagit aux signaux de commande de changement de vitesse mécaniques, et par un interrupteur de point mort (42) qui est monté entre la source de tension et les enroulements (32a à 32d) du dispositif d'entraînement électrique (30) et est couplé fonctionnellement au dispositif à levier de changement de vitesse (22), de telle façon que l'interrupteur de point mort (42) est ouvert et l'alimentation des enroulements (32a à 32d) est supprimée seulement lorsque le dispositif à levier de changement de vitesse (22) se trouve au point mort.

2. Système de commande de transmission de véhicule selon la revendication 1, caractérisé en ce qu'un autre sélecteur (40) manœuvrable manuellement et monté en série entre l'interrupteur de point mort (42) et la source de tension et interrompt dans la position ouverte l'alimentation des enroulements (32a à 32d).

EP 0 291 996 B1